# EUROPEAN PATENT APPLICATION

(11) **EP 4 588 600 A1**
(43) Date of publication of application: **23.07.2025**
(21) Application number: 24223441.7
(22) Date of filing: 27.12.2024
(51) Int. Cl.: B23K 9/09, B23K 9/095, B23K 9/12, B23K 9/173

(54) **PULSE ARC WELDING CONTROL METHOD**

(30) Priority: 18.01.2024 JP 2024006146
(71) Applicant: DAIHEN Corporation, Yodogawa-ku Osaka-shi Osaka 532-8512 (JP)
(72) Inventor: Takada, Kento, Osaka, 532-8512 (JP)
(74) Representative: Boult Wade Tennant LLP

(57) **Abstract**

A method is provided for controlling pulse arc welding. The method includes feeding a welding wire, and providing a number of currents such as: a peak rise current that rises from a value of a base current to a value of a peak current during a peak rise period; the peak current during a peak period; a peak fall current that falls from the value of the peak current to the value of the base current during a peak fall period; and the base current during a base period. The method also includes repeating the provision of the currents as one pulse cycle to perform welding. The welding wire is fed forward and backward repeatedly, and is fed backward at least during the base period.

## Description

### FIELD

The present disclosure relates to a method for controlling pulse arc welding in which the welding is perfomed by feeding a welding wire.

### BACKGROUND

Pulse arc welding in which a welding wire is fed for welding has been widely used to weld a material such as steel. The pulse arc welding includes feeding a welding wire, providing a peak rise current that rises from the value of a base current to the value of a peak current during a peak rise period, providing the peak current during a peak period, providing a peak fall current that falls from the value of the peak current to the value of the base current during a peak fall period, providing the base current during a base period, and repeating the provision of these currents as one pulse cycle to perform welding. The pulse arc welding can reduce spatters and provide a beautiful bead appearance by achieving the state of one pulse cycle-one droplet transfer.

The invention disclosed in Patent document 1 (Japanese Patent No. 6123069) is configured such that during a predetermined period from a first point in the peak period to a second point in the base period, the feed speed of the welding wire is reduced to be lower than the feed speed at the rise point of the peak current, or the welding wire is fed reversely in the direction away from the welding target.

### SUMMARY

In pulse arc welding, it is important to maintain the state of one pulse cycle-one droplet transfer in order to obtain excellent welding quality. However, in the conventional pulse arc welding, the variation of welding state may cause deviation from the state of one pulse cycle-one droplet transfer, which results in deterioration of welding quality.

Accordingly, an object of the present disclosure is to provide a method for controlling pulse arc welding that is capable of obtaining excellent welding quality by maintaining the state of one pulse cycle-one droplet transfer even when the welding state varies.

According to a first aspect of the present disclosure, there is provided a method for controlling pulse arc welding, where the method comprises: feeding a welding wire; providing a peak rise current that rises from a value of a base current to a value of a peak current during a peak rise period, providing the peak current during a peak period, providing a peak fall current that falls from the value of the peak current to the value of the base current during a peak fall period, providing the base current during a base period; and repeating the provision of the currents as one pulse cycle to perform welding. The welding wire is fed forward and backward repeatedly, and the welding wire is fed backward at least during the base period.

Preferably, a feed speed of the welding wire is configured to: start changing from a reverse-feeding peak value to a forward-feeding peak value at a start point of the peak rise period; and start changing from the forward-feeding peak value to the reverse-feeding peak value at a start point of the peak fall period.

Preferably, a period of change from the forward-feeding peak value to the reverse-feeding peak value is not longer than the peak fall period.

Preferably, at least the peak current is subjected to modulation control for performing arc length control.

According to the method for controlling pulse arc welding of the present disclosure, advantageously the "one pulse cycle-one droplet transfer" state is maintained even when the welding state varies, whereby excellent welding quality can be obtained.

### DRAWINGS

Fig. 1 is a block diagram showing a welding device for performing a method for controlling pulse arc welding according to an embodiment of the present disclosure.
Fig. 2 is a timing chart of each signal in the welding device of Fig. 1, showing a method for controlling pulse arc welding according to the embodiment of the present disclosure.

### DETAILED DESCRIPTION

Embodiments of the present disclosure will be described below with reference to the drawings.

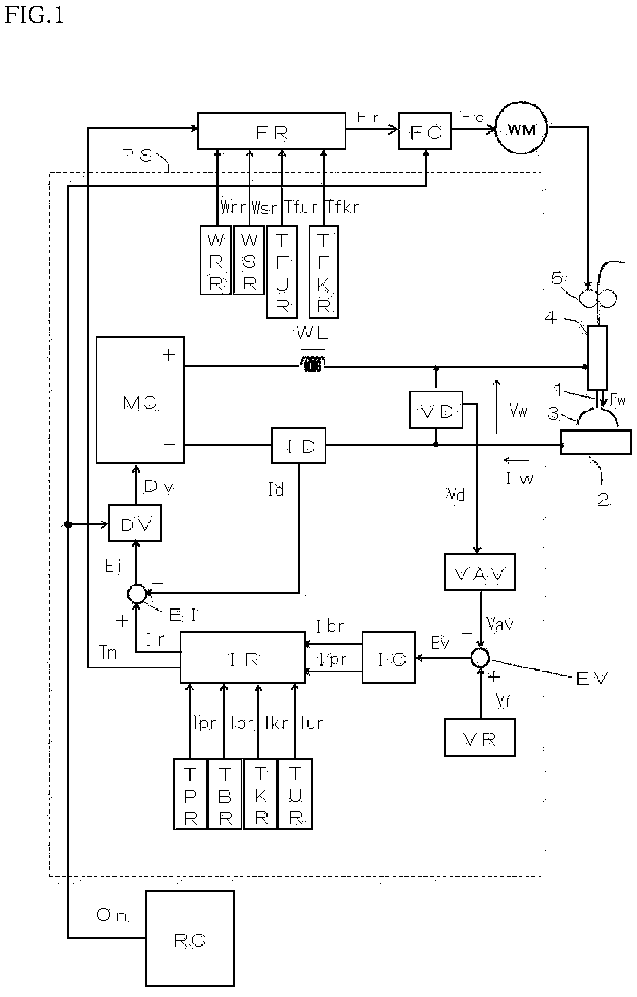

Fig. 1 is a block diagram showing a welding device for performing a method for controlling pulse arc welding according to an embodiment of the present disclosure. The welding device mainly includes a welding power source PS surrounded by a broken line, a robot control device RC, a robot (not illustrated), and so on. The following describes each block with reference to the figure.

The welding power source PS may be made up of the following blocks.

A power control circuit MC receives an AC commercial power source (not illustrated) such as three-phase 200 V as an input, performs output control such as inverter control according to a drive signal Dv described below, and outputs welding voltage Vw and welding current Iw suitable for welding. Although not illustrated, the power control circuit MC includes a primary rectification circuit that rectifies the AC commercial power source, a capacitor that smooths the rectified direct current, an inverter circuit that converts the smoothed direct current into high-frequency alternate current according to the drive signal Dv, an inverter transformer that lowers the voltage of the high-frequency alternate current to a value suitable for welding, and a secondary rectification circuit that rectifies the low-voltage high-frequency alternate current.

A reactor WL is inserted between the + (plus) side output of the power control circuit MC and a welding torch 4, and smooths the output of the power control circuit MC.

A feed motor WM is driven to rotate according to a feed control signal Fc described below. A welding wire 1 is fed forward and backward at a feed speed Fw through the welding torch 4 by the rotation of a feed roll 5 coupled to the feed motor WM, so that an arc 3 is generated between the welding wire 1 and a base material 2. The feed motor WM and the welding torch 4 are mounted on a robot. The welding voltage Vw is applied across a feed tip (not illustrated) in the welding torch 4 and the base material 2 to provide the welding current Iw.

A welding voltage detection circuit VD detects the welding voltage Vw and outputs a welding voltage detection signal Vd. A welding voltage averaging circuit VAV averages the welding voltage detection signal Vd (passes the signal Vd through a low pass filter) and outputs a welding voltage average signal Vav. A welding voltage setting circuit VR outputs a predetermined welding voltage setting signal Vr. A voltage error amplification circuit EV amplifies the error between the welding voltage setting signal Vr (+) and the welding voltage average signal Vav (-), and outputs a voltage error amplification signal Ev.

A current modulation circuit IC receives the voltage error amplification signal Ev as an input to perform Proportional-Integral (PI) control or Proportional-Integral-Derivative (PID) control, and outputs a peak current setting signal Ipr and a base current setting signal Ibr. The circuit IC performs current modulation control on the peak current setting signal Ipr and the base current setting signal Ibr so that the welding voltage average signal Vav will be equal to the welding voltage setting signal Vr. As a result, arc length control is performed such that the arc length is maintained at an appropriate value. It is possible to perform current modulation control on only the peak current setting signal Ipr and set the base current setting signal Ibr to a predetermined value.

A peak rise period setting circuit TUR outputs a predetermined peak rise period setting signal Tur. A peak period setting circuit TPR outputs a predetermined peak period setting signal Tpr. A peak fall period setting circuit TKR outputs a predetermined peak fall period setting signal Tkr. A base period setting circuit TBR outputs a predetermined base period setting signal Tbr.

A welding current setting circuit IR receives the peak rise period setting signal Tur, the peak period setting signal Tpr, the peak fall period setting signal Tkr, the base period setting signal Tbr, the peak current setting signal Ipr, and the base current setting signal Ibr as inputs to perform the following process, and outputs a welding current setting signal Ir and a timer signal Tm.
(1) During a peak rise period Tu defined by the peak rise period setting signal Tur, output a timer signal Tm = 1, and output, as the welding current setting signal Ir, a peak rise current Iu that rises from the value of the base current setting signal Ibr to the value of the peak current setting signal Ipr.
(2) Then, during a peak period Tp defined by the peak period setting signal Tpr, output a timer signal Tm = 2, and output the peak current setting signal Ipr as the welding current setting signal Ir.
(3) Then, during a peak fall period Tk defined by the peak fall period setting signal Tkr, output a timer signal Tm = 3, and output, as the welding current setting signal Ir, a peak fall current Ik that falls from the value of the peak current setting signal Ipr to the value of the base current setting signal Ibr.
(4) Then, during a base period Tb defined by the base period setting signal Tbr, output a timer signal Tm = 4, and output the base current setting signal Ibr as the welding current setting signal Ir.
(5) Repeat the above steps (1) to (4).

A forward-feeding peak value setting circuit WSR outputs a forward-feeding peak value setting signal Wsr having a predetermined positive value. A reverse-feeding peak value setting circuit WRR outputs a reverse-feeding peak value setting signal Wrr having a predetermined negative value.

A welding current detection circuit ID detects the welding current Iw, and outputs a welding current detection signal Id. A current error amplification circuit EI amplifies the error between the welding current setting signal Ir (+) and the welding current detection signal Id (-), and outputs a current error amplification signal Ei. A drive circuit DV receives the current error amplification signal Ei and an activation signal On from the robot control device RC (described below) as inputs. When the activation signal On is at High level (start of welding), the drive circuit DV performs PWM modulation control based on the current error amplification signal Ei and outputs the drive signal Dv for driving the inverter circuit within the power control circuit MC. When the activation signal On is at Low level (the stop of welding), the drive circuit DV does not output the drive signal Dv.

A rise change period setting circuit TFUR outputs a predetermined rise change period setting signal Tfur. The value of the rise change period setting signal Tfur is set to a value not greater than the value of the peak rise period setting signal Tur. A fall change period setting circuit TFKR outputs a predetermined fall change period setting signal Tfkr. The value of the fall change period setting signal Tfkr is set to a value not greater than the value of the peak fall period setting signal Tkr.

A feed speed setting circuit FR receives the forward-feeding peak value setting signal Wsr, the reverse-feeding peak value setting signal Wrr, the timer signal Tm, the rise change period setting signal Tfur, and the fall change period setting signal Tfkr as inputs to perform the following process, and outputs a feed speed setting signal Fr.
(1) During a rise change period Tfu defined by the rise change period setting signal Tfur and starting from the start point of the peak rise period Tu where the timer signal Tm = 1, output the feed speed setting signal Fr that changes from the value of the reverse-feeding peak value setting signal Wrr to the value of the forward-feeding peak value setting signal Wsr.
(2) Then, output the forward-feeding peak value setting signal Wsr as the feed speed setting signal Fr.
(3) During a fall change period Tfk defined by the fall change period setting signal Tfkr and starting from the start point of the peak fall period Tk where the timer signal Tm = 3, output the feed speed setting signal Fr that changes from the value of the forward-feeding peak value setting signal Wsr to the value of the reverse-feeding peak value setting signal Wrr.
(4) Then, output the reverse-feeding peak value setting signal Wrr as the feed speed setting signal Fr.
(5) Repeat the above steps (1) to (4).

A feed control circuit FC receives the feed speed setting signal Fr and the activation signal On from the robot control device RC (described below) as inputs. When the activation signal On is at High level (start of welding), the feed control circuit FC outputs, to the feed motor WM, the feed control signal Fc for feeding the welding wire 1 at the value of the feed speed setting signal Fr. When the activation signal On is at Low level, the feed control circuit FC outputs, to the feed motor WM, the feed control signal Fc for stopping feeding.

The robot control device RC moves a robot (not illustrated) according to a pre-instructed operation program, and outputs the activation signal On that commands either the start of welding or the stop of welding.

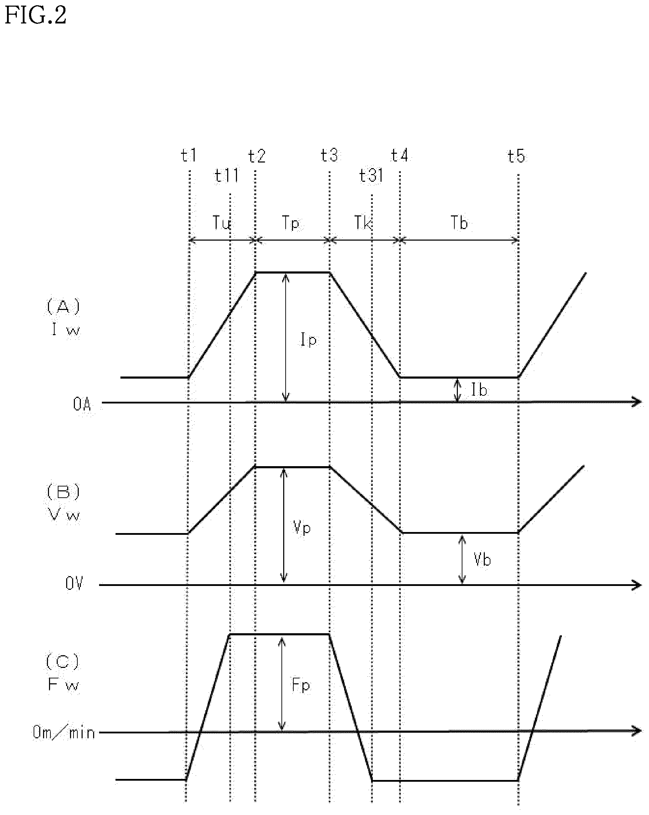

Fig. 2 is a timing chart of each signal in the welding device of Fig. 1, showing a method for controlling pulse arc welding according to the embodiment of the present disclosure. In the figure, (A) shows the change of the welding current Iw over time, (B) shows the change of the welding voltage Vw over time, and (C) shows the change of the feed speed Fw of the welding wire over time. The operation of each signal will be described below with reference to the figure.

When the feed speed Fw shown in (C) of Fig. 2 takes a positive value above zero, the welding device is in a forward-feeding state where the welding wire is fed forward in a direction toward a base material. When the feed speed Fw takes a negative value below zero, the welding device is in a reverse-feeding state where the welding wire is fed backward in a direction away from the base material.

During the peak rise period Tu, which is the predetermined period from time t1 to t2, the peak rise current Iu that rises from a base current Ib subjected to current modulation control to a peak current Ip subjected to current modulation control is provided as shown in (A) in Fig. 2, and a peak rise voltage that rises from a base voltage Vb to a peak voltage Vp is applied across the welding wire and the base material as shown in (B) in Fig. 2. During the rise change period Tfu, which is the predetermined period from time t1 to t11, the feed speed Fw changes from a reverse-feeding peak value Wr to a forward-feeding peak value Ws, as shown in (C) of Fig. 2. The start point of the rise change period Tfu is synchronized with the start point of the peak rise period Tu. The rise change period Tfu is not longer than the peak rise period Tu. The peak rise period Tu is set by the peak rise period setting signal Tur shown in Fig. 1. The base current Ib is set by the base current setting signal Ibr in Fig. 1. The peak current Ip is set by the peak current setting signal Ipr in Fig. 1. The rise change period Tfu is set by the rise change period setting signal Tfur in Fig. 1. The reverse-feeding peak value Wr is set by the reverse-feeding peak value setting signal Wrr in Fig. 1. The forward-feeding peak value Ws is set by the forward-feeding peak value setting signal Wsr in Fig. 1.

During the peak period Tp, which is the predetermined period from time t2 to t3, the peak current Ip subjected to current modulation control is provided as shown in (A) in Fig. 2, and the peak voltage Vp is applied across the welding wire and the base material as shown in (B) in Fig. 2. During the period from time t11 to t3, the feed speed Fw takes the forward-feeding peak value Ws as shown in (C) of Fig. 2. The peak period Tp is set by the peak period setting signal Tpr in Fig. 1.

During the peak fall period Tk, which is the predetermined period from time t3 to t4, the peak fall current Ik that falls from the peak current Ip subjected to current modulation control to the base current Ib subjected to current modulation control is provided as shown in (A) in Fig. 2, and a peak fall voltage that falls from the peak voltage Vp to the base voltage Vb is applied across the welding wire and the base material as shown in (B) in Fig. 2. During the fall change period Tfk, which is the predetermined period from time t3 to t31, the value of the feed speed Fw changes from the forward-feeding peak value Ws to the reverse-feeding peak value Wr as shown in (C) in Fig. 2. The start point of the fall change period Tfk is synchronized with the start point of the peak fall period Tk. The fall change period Tfk is not longer than the peak fall period Tk. The peak fall period Tk is set by the peak fall period setting signal Tkr shown in Fig. 1. The fall change period Tfk is set by the fall change period setting signal Tfkr in Fig. 1.

During the base period Tb, which is the predetermined period from time t4 to t5, the base current Ib subjected to current modulation control is provided as shown in (A) in Fig. 2, and the base voltage Vb is applied across the welding wire and the base material as shown in (B) in Fig. 2. During the period from time t31 to t5, the feed speed Fw takes the reverse-feeding peak value Wr as shown in (C) in Fig. 2. Thus, the welding wire is fed backward at least during the base period Tb. The base period Tb is set by the base period setting signal Tbr in Fig. 1.

Numerical examples of the parameters described above will be given below.
Tu = 1 ms, Tp = 1 ms, Tk = 1 ms, Tb = 3 ms
Ip = 350 to 450 A, Ib = 50 to 150 A
Tfu = 0.5 to 1 ms, Tfk = 0.5 to 1 ms
Ws = 50 m/min, Wr = -30 m/min

The following describes the advantages of the present embodiment. According to the present embodiment, a method for controlling pulse arc welding includes: feeding a welding wire; and providing a peak rise current that rises from a value of a base current to a value of a peak current during a peak rise period, providing the peak current during a peak period, providing a peak fall current that falls from the value of the peak current to the value of the base current during a peak fall period, providing the base current during a base period, and repeating the provision of the currents as one pulse cycle to perform welding. In this method, the welding wire is fed forward and backward repeatedly, and is fed backward at least during the base period. A droplet is formed at a tip of the welding wire by providing the peak current during the peak period. During the base period subsequent to the peak period, the welding wire is fed backward, thereby allowing an upward force to act on the droplet continuously during the base period. This ensures that the droplet moves into the molten pool. As a result, the state of one pulse cycle-one droplet transfer is always maintained even when the welding state varies, thus achieving excellent welding quality.

More preferably, according to the present embodiment, a feed speed of the welding wire starts changing from a reverse-feeding peak value to a forward-feeding peak value at a start point of the peak rise period, and starts changing from the forward-feeding peak value to the reverse-feeding peak value at a start point of the peak fall period. Because the start point of the peak rise period is synchronized with the start point at which the feed speed starts changing from the reverse-feeding peak value to the forward-feeding peak value, a droplet having an appropriate size can be reliably formed during the peak period. In addition, because the start point of the peak fall period is synchronized with the start point at which the feed speed starts changing from the forward-feeding peak value to the reverse-feeding peak value, a strong upward force acts on the droplet. Thus, the droplet is reliably separated and move into the molten pool.

More preferably, according to the present embodiment, a period in which the feed speed changes from the forward-feeding peak value to the reverse-feeding peak value is not longer than the peak fall period. This further increases the upward force acting on the droplet, thereby separating the droplet more reliably and allowing the droplet to move into the molten pool.

More preferably, according to the present embodiment, at least the peak current is subjected to modulation control to perform arc length control. In this way, the pulse cycle is set to a predetermined value, which allows the average value of the feed speed to be set to a predetermined value. This makes it possible to suppress changes in bead appearance and penetration shape caused by a variation in the average value of the feed speed.

### REFERENCE NUMERALS

- 1: Welding wire
- 2: Base material
- 3: Arc
- 4: Welding torch
- 5: Feed roll
- DV: Drive circuit
- Dv: Drive signal
- EI: Current error amplification circuit
- Ei: Current error amplification signal
- EV: Voltage error amplification circuit
- Ev: Voltage error amplification signal
- FC: Feed control circuit
- Fc: Feed control signal
- FR: Feed speed setting circuit
- Fr: Feed speed setting signal
- Fw: Feed speed
- Ib: Base current
- Ibr: Base current setting signal
- IC: Current modulation circuit
- ID: Welding current detection circuit
- Id: Welding current detection signal
- Ik: Peak fall current
- Ip: Peak current
- Ipr: Peak current setting signal
- IR: Welding current setting circuit
- Ir: Welding current setting signal
- Iu: Peak rise current
- Iw: Welding current
- MC: Power control circuit
- On: Activation signal
- PS: Welding power source
- RC: Robot control device
- Tb: Base period
- TBR: Base period setting circuit
- Tbr: Base period setting signal
- Tfk: Fall change period
- TFKR: Fall change period setting circuit
- Tfkr: Fall change period setting signal
- Tfu: Rise change period
- TFUR: Rise change period setting circuit
- Tfur: Rise change period setting signal
- Tk: Peak fall period
- TKR: Peak fall period setting circuit
- Tkr: Peak fall period setting signal
- Tp: Peak period
- TPR: Peak period setting circuit
- Tpr: Peak period setting signal
- Tu: Peak rise period
- TUR: Peak rise period setting circuit
- Tur: Peak rise period setting signal
- VAV: Welding voltage averaging circuit
- Vav: Welding voltage average signal
- Vb: Base voltage
- VD: Welding voltage detection circuit
- Vd: Welding voltage detection signal
- Vp: Peak voltage
- VR: Welding voltage setting circuit
- Vr: Welding voltage setting signal
- Vw: Welding voltage
- WL: Reactor
- WM: Feed motor
- Wr: Reverse-feeding peak value
- WRR: Reverse-feeding peak value setting circuit
- Wrr: Reverse-feeding peak value setting signal
- Ws: Forward-feeding peak value
- WSR: Forward-feeding peak value setting circuit
- Wsr: Forward-feeding peak value setting signal

## Claims

1. A method for controlling pulse arc welding, the method comprising:
feeding a welding wire;
providing a peak rise current that rises from a value of a base current to a value of a peak current during a peak rise period, providing the peak current during a peak period, providing a peak fall current that falls from the value of the peak current to the value of the base current during a peak fall period, providing the base current during a base period; and
repeating the provision of the currents as one pulse cycle to perform welding,
wherein the welding wire is fed forward and backward repeatedly, and is fed backward at least during the base period.

2. The method according to claim 1, wherein a feed speed of the welding wire is configured to:
start changing from a reverse-feeding peak value to a forward-feeding peak value at a start point of the peak rise period; and
start changing from the forward-feeding peak value to the reverse-feeding peak value at a start point of the peak fall period.

3. The method according to claim 2, wherein a period of change from the forward-feeding peak value to the reverse-feeding peak value is not longer than the peak fall period.

4. The method according to any of claims 1 to 3, wherein at least the peak current is subjected to modulation control for performing arc length control.
